# EUROPEAN PATENT APPLICATION

(11) **EP 3 466 647 A1**
(43) Date of publication of application: **10.04.2019**
(21) Application number: 17810258.8
(22) Date of filing: 05.06.2017
(51) Int. Cl.: B29C 64/153, B22F 3/105, B22F 3/16, B29C 64/268, B33Y 10/00, B33Y 30/00

(54) **SELECTIVE BEAM MELTING APPARATUS AND SELECTIVE BEAM MELTING METHOD**

(30) Priority: 07.06.2016 JP 2016113174
(71) Applicant: Mitsubishi Heavy Industries, Ltd., Tokyo 108-8215 (JP)
(72) Inventor: HARAGUCHI, Hidetaka, Tokyo 108-8215 (JP); KITAMURA, Masashi, Tokyo 108-8215 (JP); TANIGAWA, Shuji, Tokyo 108-8215 (JP)
(74) Representative: Henkel, Breuer & Partner
(86) International application number: PCT/JP2017/020821
(87) International publication number: WO 2017/213082

(57) **Abstract**

A selective beam additive manufacturing device includes: a powder-bed forming unit capable of forming a powder bed on a base plate capable of moving up and down inside a frame; a manufacturing-beam emission unit capable of emitting a manufacturing beam onto a powder bed; a heating-beam emission unit capable of emitting a heating beam whose output is lower than that of the manufacturing beam onto the powder bed; and a control device. The control device is configured to be capable of: controlling the manufacturing-beam emission unit such that the manufacturing-beam emission unit emits the manufacturing beam onto the powder bed along a setting route corresponding to a shape of a target object to be manufactured; and controlling the manufacturing-beam emission unit such that the heating-beam emission unit emits the heating beam onto the powder bed along the setting route.

## Description

### TECHNICAL FIELD

The present disclosure relates to a selective beam additive manufacturing device and a selective beam additive manufacturing method.

### BACKGROUND ART

A selective beam additive manufacturing device includes a base plate, a powder-bed forming device capable of forming a powder bed on the base plate, and a beam emission device capable of emitting a beam selectively to a part of the powder bed. According to a selective beam additive manufacturing method using a selective beam additive manufacturing device, by emitting a beam to each layer of a powder bed while repeatedly laminating the powder bed, it is possible to selectively melt and solidify a part of particles in the powder bed and produce a molded product.

Furthermore, the selective beam additive manufacturing method includes pre-heating the powder bed. For instance, in the selective laser sintering system disclosed in Patent Document 1, the surface of a component bed is pre-heated by a thermal radiation element.

In contrast, in the selective beam additive manufacturing method that uses an electronic beam instead of laser, an electronic beam is emitted to the entire surface of the powder bed while scanning the powder bed at a high speed, in order to pre-heat the powder bed. The powder bed is pre-heated to make particles in the powder adhere lightly to one another or sinter provisionally, in order to prevent partial electric charging of the powder bed at the time when an electronic beam is emitted for manufacturing, and prevent a smoking phenomenon in which powders scatter due to electric charging.

### Citation List

### Patent Literature

Patent Document 1: JP2005-335392A

### SUMMARY

### Problems to be Solved

As disclosed in Patent Document 1, in a case where the powder bed is pre-heated by a thermal radiation element, a broad region is heated by the thermal radiation element, and thus particles in the powder bed may adhere to one another (provisional sintering or fusion) in an undesirable region of the powder bed. If a chunk of particles sticking together exists inside a finished manufactured object, it may be difficult to remove such a chunk. Accordingly, a selective beam additive manufacturing device using laser has the problem of being incapable of producing a manufactured object having a complex internal structure, due to pre-heating of the powder bed by a thermal radiation element.

Similarly, pre-heating by an electronic beam may also lead to mutual adhesion of particles. Accordingly, a selective beam additive manufacturing device using an electronic beam also has the problem of being incapable of producing a manufactured object having a complex internal structure, due to pre-heating of the entire powder bed by an electronic beam.

Meanwhile, if pre-heating of the powder bed is not performed, the temperature increases and decreases rapidly and locally in a region where the beam is emitted selectively for manufacturing, and thereby residual stress is generated in the manufactured object. Although thermal processing is performed to remove residual stress of a manufactured object, there is a problem of deformation of the manufactured object due to attenuation of the residual stress from thermal processing, and an increase in the number of steps for producing the manufactured object.

Furthermore, not pre-heating the powder bed raises another problem such as formation of cracks and voids in the manufactured object, which deteriorates the quality of the manufactured object.

In view of the above, an object of at least one embodiment of the present invention is to provide a selective beam additive manufacturing device and a selective beam additive manufacturing method capable of reducing residual stress in a manufactured object, and producing a high-quality manufactured object having a complex internal structure.

### Solution to the Problems

(1) According to at least one embodiment of the present invention, a selective beam additive manufacturing device includes: a frame; a base plate capable of moving up and down inside the frame; a powder-bed forming unit capable of forming a powder bed on the base plate; a manufacturing-beam emission unit capable of emitting a manufacturing beam onto the powder bed; a heating-beam emission unit capable of emitting a heating beam whose output is lower than that of the manufacturing beam onto the powder bed; and a control device capable of controlling the manufacturing-beam emission unit and the heating-beam emission unit. The control device is configured to be capable of: controlling the manufacturing-beam emission unit such that the manufacturing-beam emission unit emits the manufacturing beam onto the powder bed along a setting route corresponding to a shape of a target object to be manufactured; and controlling the manufacturing-beam emission unit such that the heating-beam emission unit emits the heating beam onto the powder bed along the setting route.
   With the above configuration (1), it is possible to emit the manufacturing beam and the heating beam having a lower output than the manufacturing beam along the setting route, to the powder bed, and thus it is possible to heat the region irradiated with the manufacturing beam with the heating beam locally.
   Thus, mutual adhesion of particles of the powder bed in an undesirable region is prevented, which makes it possible to remove powder in a finished manufactured object even in a case where the manufactured object has a complex internal structure.
   Furthermore, it is possible to heat the region irradiated with the manufacturing beam with the heating beam, and thus it is possible to reduce residual stress of a manufactured object, and suppress formation of cracks and voids in a manufactured object, which makes it possible to produce high-quality manufactured objects.
   Accordingly, with the above configuration (1), it is possible to reduce residual stress in a manufactured object, and produce a high-quality manufactured object having a complex internal structure.
   Further, the region irradiated with the manufacturing beam may be a region being irradiated with the manufacturing beam, a region that is going to be irradiated with the manufacturing beam, or a region which has been already irradiated with the manufacturing beam.
(2) In some embodiments, in the above configuration (1), the control device is configured to be capable of changing a profile shape of the heating beam on the powder bed.
   With the above configuration (2), by changing the profile shape of the heating beam, it is possible to heat the powder bed locally with the heating beam under various conditions. Thus, with the above configuration (2), it is possible to reduce residual stress in a manufactured object reliably, and produce a high-quality manufactured object having a complex internal structure reliably.
(3) In some embodiments, in the above configuration (1) or (2), the control device is configured to be capable of changing a relative positional relationship between an emission position of the manufacturing beam and an emission position of the heating beam on the powder bed.
   With the above configuration (3), by changing the relative positional relationship between the emission position of the manufacturing beam and the emission position of the heating beam on the powder bed, it is possible to heat the powder bed locally with the heating beam under various conditions. Thus, with the above configuration (3), it is possible to reduce residual stress in a manufactured object reliably, and produce a high-quality manufactured object having a complex internal structure reliably.
(4) In some embodiments, in any one of the above configurations (1) to (3), the control device is configured to be capable of scanning the powder bed with the heating beam in a wavy shape which travels along the setting route.
   With the above configuration (4), the control device is configured to be capable of scanning the powder bed with the heating beam in a wavy shape that travels along the setting route, and thus it is possible to heat the region to be irradiated by the manufacturing beam and its surrounding sufficiently without concentrating the heating beam. Thus, with the above configuration (4), it is possible to reduce residual stress in a manufactured object reliably, and produce a high-quality manufactured object having a complex internal structure reliably.
(5) In some embodiments, in any one of the above configurations (1) to (4), the manufacturing-beam emission unit is configured to also function as the heating-beam emission unit, and the control device is configured to be capable of emitting the manufacturing beam and the heating beam at different timings from each other.
   With the above configuration (5), the manufacturing-beam emission unit also serves as the heating-beam emission unit, and thus it is possible to reduce residual stress in a manufactured object, and produce a high-quality manufactured object having a complex internal structure with a simple configuration.
(6) In some embodiments, in the above configuration (1), the control device is configured to be capable of changing at least one of a relative positional relationship between an emission position of the manufacturing beam and an emission position of the heating beam on the powder bed, a profile shape of the heating beam on the powder bed, or a scanning direction of the heating beam on the powder bed, according to at least one of a scanning direction of the manufacturing beam, a material constituting the powder bed, or duration of pre-heating by the heating beam.
   With the above configuration (6), by changing at least one of the relative positional relationship between the emission position of the manufacturing beam and the emission position of the heating beam on the powder bed, the profile shape of the heating beam on the powder bed, or the scanning direction of the heating beam on the powder bed, according to at least one of the scanning direction of the manufacturing beam, the material constituting the powder bed, or duration of pre-heating by the heating beam, it is possible to reduce the residual stress of a manufactured object while performing bare minimum pre-heating, and produce a high-quality manufactured object having a complex internal structure.
(7) According to at least one embodiment of the present invention, a selective beam additive manufacturing method includes: a powder-bed forming step of forming a powder bed on a base plate disposed so as to be movable up and down in a frame; a manufacturing-beam emission step of emitting a manufacturing beam onto the powder bed along a setting route corresponding to a shape of a target object to be manufactured; and a heating-beam emission step of emitting a heating beam whose output is lower than that of the manufacturing beam along the setting route onto the powder bed.
   With the above configuration (7), it is possible to emit the manufacturing beam and the heating beam having a lower output than the manufacturing beam along the setting route to the powder bed, and thus it is possible to heat the region irradiated with the manufacturing beam with the heating beam locally.
   Thus, mutual adhesion of particles of the powder bed in an undesirable region is prevented, which makes it possible to remove powder in a finished manufactured object even in a case where the manufactured object has a complex internal structure.
   Furthermore, it is possible to heat the region irradiated with the manufacturing beam with the heating beam, and thus it is possible to reduce residual stress of a manufactured object, and suppress formation of cracks and voids in a manufactured object, which makes it possible to produce high-quality manufactured objects.
   Accordingly, with the above configuration (7), it is possible to reduce residual stress in a manufactured object, and produce a high-quality manufactured object having a complex internal structure.
   Further, the region irradiated with the manufacturing beam may be a region being irradiated with the manufacturing beam, a region that is going to be irradiated with the manufacturing beam, or a region which has been already irradiated with the manufacturing beam.
(8) In some embodiments, in the above configuration (7), the heating-beam emission step includes emitting the heating beam having a circular or rectangular beam shape.
   With the above configuration (8), by emitting the heating beam having a circular or rectangular beam shape, it is possible to reduce residual stress in a manufactured object, and produce a high-quality manufactured object having a complex internal structure.
(9) In some embodiments, in the above configuration (7) or (8), the heating-beam emission step includes emitting the heating beam having a greater beam diameter than a beam diameter of the manufacturing beam.
   With the above configuration (9), by emitting the heating beam having a greater beam diameter than the beam diameter of the manufacturing beam, it is possible to heat the region irradiated by the manufacturing beam and its surrounding with the heating beam. Thus, with the above configuration (9), it is possible to reduce residual stress in a manufactured object, and produce a high-quality manufactured object having a complex internal structure.
(10) In some embodiments, in any one of the above configurations (7) to (9), the heating-beam emission step includes emitting the heating beam while scanning the powder bed with the heating beam in a wavy shape which travels along the setting route.
   With the above configuration (10), the powder bed is scanned with the heating beam in a wavy shape that travels along the setting route, and thus it is possible to heat the region to be irradiated by the manufacturing beam and its surrounding sufficiently without concentrating the heating beam. Thus, with the above configuration (10), it is possible to reduce residual stress in a manufactured object reliably, and produce a high-quality manufactured object having a complex internal structure reliably.
(11) In some embodiments, in the above configuration (9), the heating-beam emission step includes emitting the heating beam so as to position an emission position of the manufacturing beam on the powder bed in the center of an emission position of the heating beam, in a scanning direction of the manufacturing beam.
   With the above configuration (11), the heating beam is emitted so that the emission position of the manufacturing beam on the powder bed is in the center of the emission position of the heating beam in the scanning direction of the manufacturing beam, and thus it is possible to heat the region to be irradiated by the manufacturing beam in advance with the heating beam, and heat the region already irradiated by the manufacturing beam afterward with the heating beam. Thus, with the above configuration (11), it is possible to reduce residual stress in a manufactured object reliably, and produce a high-quality manufactured object having a complex internal structure reliably.
(12) In some embodiments, in any one of the above configurations (7) to (10), the heating-beam emission step includes emitting the heating beam so as to position an emission position of the manufacturing beam on the powder bed behind the center of an emission position of the heating beam, in a scanning direction of the manufacturing beam.
   With the above configuration (12), the heating beam is emitted so that the emission position of the manufacturing beam on the powder bed is behind the center of the emission position of the heating beam in the scanning direction of the manufacturing beam, and thus it is possible to heat the region to be irradiated by the manufacturing beam in advance with the heating beam. Thus, with the above configuration (12), it is possible to reduce residual stress in a manufactured object reliably, and produce a high-quality manufactured object having a complex internal structure reliably.
(13) In some embodiments, in any one of the above configurations (7) to (10), the heating-beam emission step includes emitting the heating beam so as to position an emission position of the manufacturing beam on the powder bed in front of the center of an emission position of the heating beam, in a scanning direction of the manufacturing beam.

With the above configuration (13), the heating beam is emitted so that the emission position of the manufacturing beam on the powder bed is in front of the center of the emission position of the heating beam in the scanning direction of the manufacturing beam, and thus it is possible to heat the region already irradiated by the manufacturing beam afterward with the heating beam. Thus, with the above configuration (13), it is possible to reduce residual stress in a manufactured object reliably, and produce a high-quality manufactured object having a complex internal structure reliably. (14) In some embodiments, in the above configuration (7), the heating-beam emission step includes changing at least one of a relative positional relationship between an emission position of the manufacturing beam and an emission position of the heating beam on the powder bed, a profile shape of the heating beam on the powder bed, or a scanning direction of the heating beam on the powder bed, according to at least one of a scanning direction of the manufacturing beam, a material constituting the powder bed, or duration of pre-heating by the heating beam.

With the above configuration (14), by changing at least one of the relative positional relationship between the emission position of the manufacturing beam and the emission position of the heating beam on the powder bed, the profile shape of the heating beam on the powder bed, or the scanning direction of the heating beam on the powder bed, according to at least one of the scanning direction of the manufacturing beam, the material constituting the powder bed, or duration of pre-heating by the heating beam, it is possible to reduce the residual stress of a manufactured object while performing bare minimum pre-heating, and produce a high-quality manufactured object having a complex internal structure.

### Advantageous Effects

According to at least one embodiment of the present invention, it is possible to provide a selective beam additive manufacturing device and a selective beam additive manufacturing method capable of reducing residual stress in a manufactured object, and producing a high-quality manufactured object having a complex internal structure.

### BRIEF DESCRIPTION OF DRAWINGS

FIG. 1 is a schematic configuration diagram of a selective beam additive manufacturing device according to an embodiment of the present invention.
FIG. 2 is a graph schematically showing an example of the profile shape of a manufacturing beam and a heating beam emitted to a powder bed by the selective beam additive manufacturing device in FIG. 1.
FIG. 3 is a diagram schematically showing, on a powder bed, the beam shape of a manufacturing beam and a heating beam having the profile shape in FIG. 2.
FIG. 4 is a graph schematically showing an example of the profile shape of a manufacturing beam and a heating beam emitted to a powder bed by the selective beam additive manufacturing device in FIG. 1.
FIG. 5 is a diagram schematically showing, on a powder bed, the beam shape of a manufacturing beam and a heating beam having the profile shape in FIG. 4.
FIG. 6 is a diagram schematically showing, on a powder bed, the beam shape of a manufacturing beam and a heating beam having the profile shape in FIG. 4.
FIG. 7 is a diagram schematically showing, on a powder bed, the beam shape of a manufacturing beam and a heating beam having the profile shape in FIG. 4.
FIG. 8 is a diagram schematically showing the beam shape of the manufacturing beam having the profile shape in FIG. 4, along with a part of the wavy trajectory of the heating beam.
FIG. 9 is a diagram schematically showing the beam shape of the manufacturing beam having the profile shape in FIG. 4, along with a part of the wavy trajectory of the heating beam.
FIG. 10 is a diagram schematically showing the beam shape of the manufacturing beam having the profile shape in FIG. 4, along with a part of the wavy trajectory of the heating beam.
FIG. 11 is a flowchart showing a schematic procedure of a selective beam additive manufacturing method according to an embodiment of the present invention.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

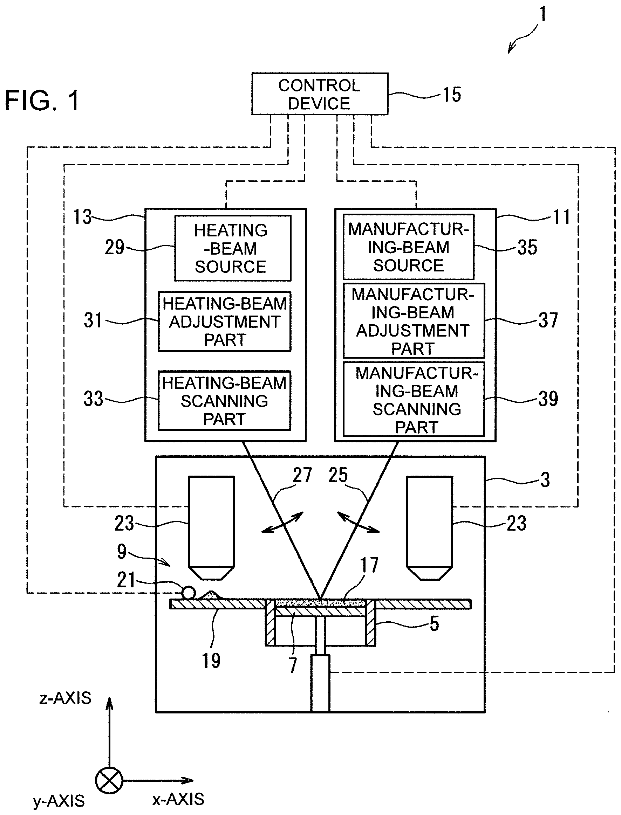

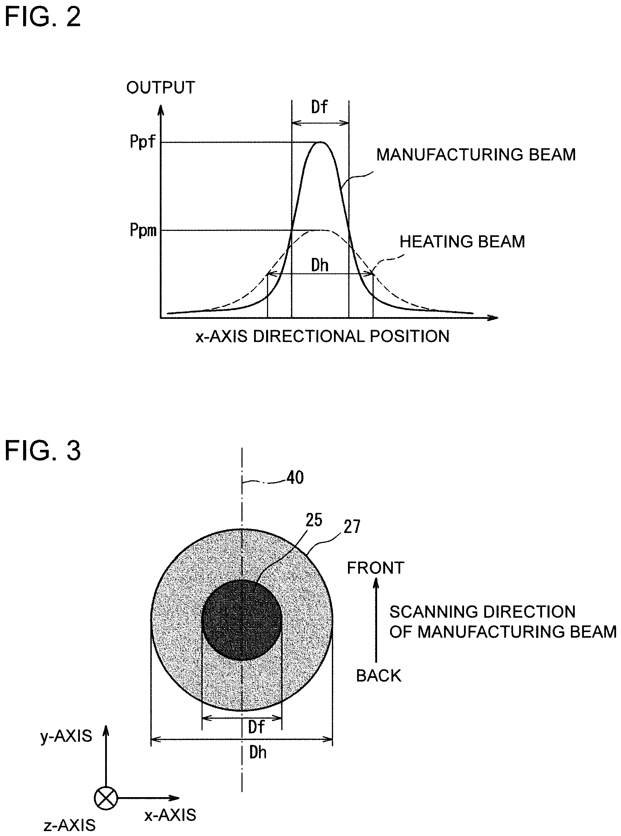

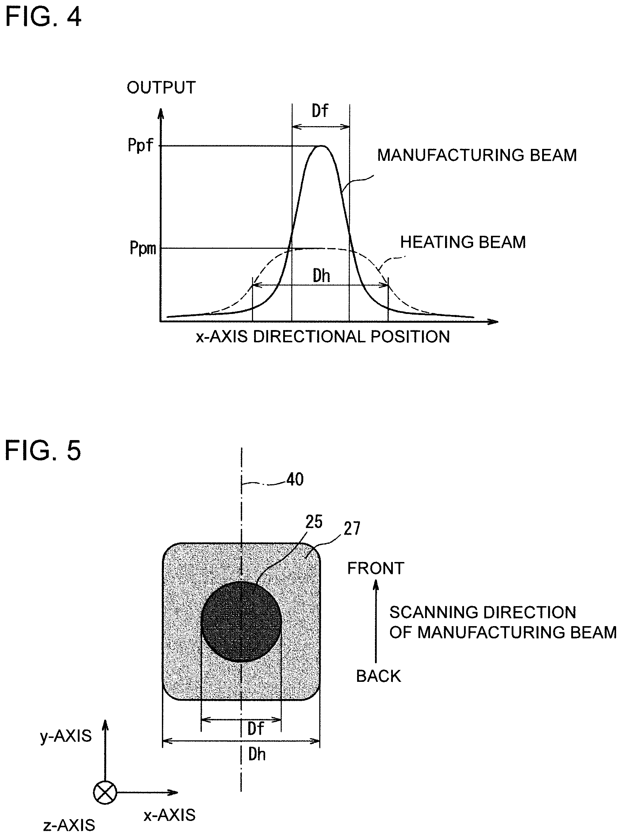

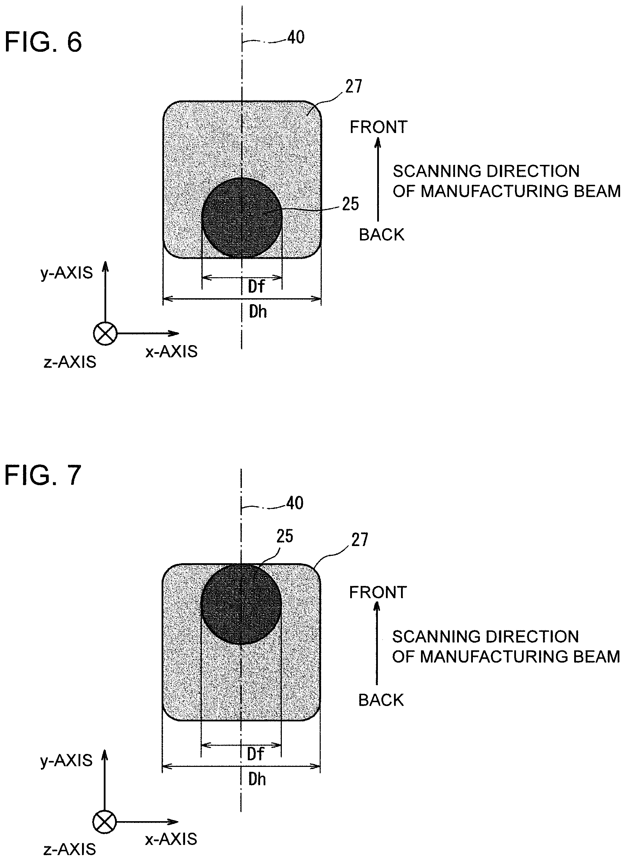

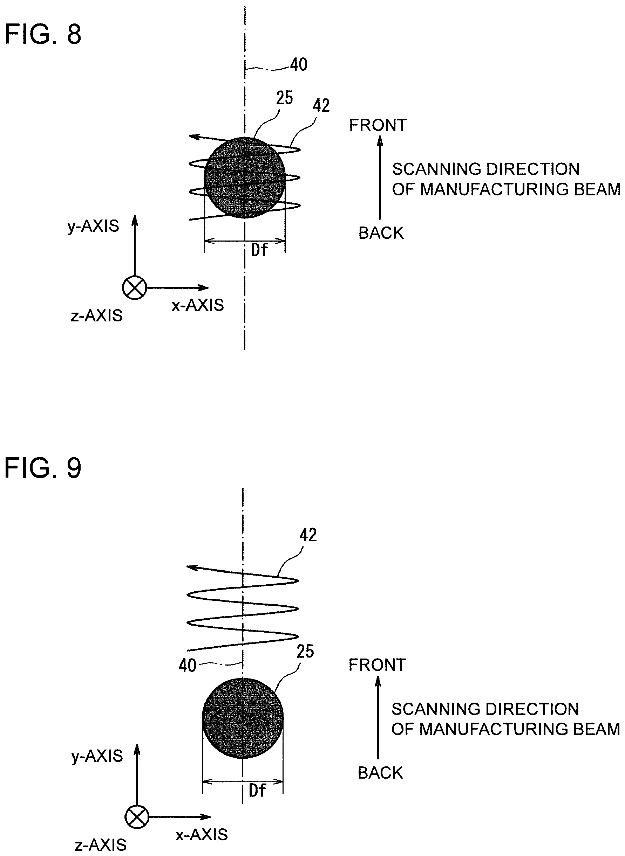

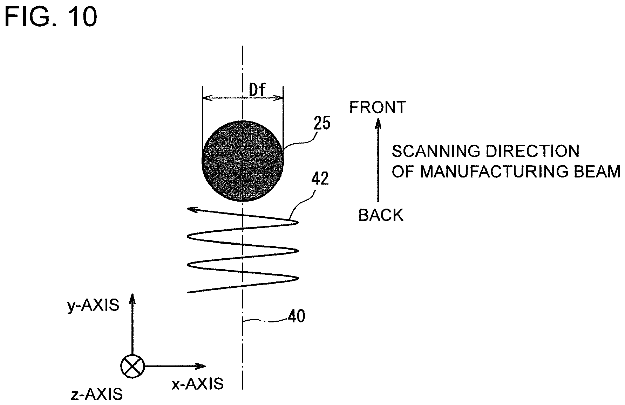

FIG. 1 is a schematic configuration diagram of a selective beam additive manufacturing device (hereinafter, also referred to as simply manufacturing device) according to an embodiment of the present invention. FIG. 2 is a graph schematically showing an example of the profile shape of a manufacturing beam and a heating beam emitted to a powder bed by the manufacturing device 1 in FIG. 1. FIG. 3 is a diagram schematically showing, on a powder bed, the beam shape of a manufacturing beam and a heating beam having the profile shape in FIG. 2. FIG. 4 is a graph schematically showing an example of the profile shape of a manufacturing beam and a heating beam emitted to a powder bed by the manufacturing device 1 in FIG. 1. FIG. 5 is a diagram schematically showing, on a powder bed, the beam shape of a manufacturing beam and a heating beam having the profile shape in FIG. 4, showing that the emission position of the manufacturing beam is positioned in the center of the emission position of the heating beam in the scanning direction of the manufacturing beam. FIG. 6 is a diagram schematically showing, on a powder bed, the beam shape of a manufacturing beam and a heating beam having the profile shape in FIG. 4, where the emission position of the manufacturing beam is positioned behind the center of the emission position of the heating beam in the scanning direction of the manufacturing beam. FIG. 7 is a diagram schematically showing, on a powder bed, the beam shape of a manufacturing beam and a heating beam having the profile shape in FIG. 4, showing that the emission position of the manufacturing beam is positioned in front of the center of the emission position of the heating beam in the scanning direction of the manufacturing beam. FIG. 8 is a diagram schematically showing the beam shape of the manufacturing beam having the profile shape in FIG. 4, along with a part of the wavy trajectory of the heating beam, where the difference between the emission position of the manufacturing beam and the emission position of the heating beam is small in the scanning direction of the manufacturing beam. FIG. 9 is a diagram schematically showing the beam shape of the manufacturing beam having the profile shape in FIG. 4, along with a part of the wavy trajectory of the heating beam, where the emission position of the manufacturing beam is positioned behind the emission position of the heating beam in the scanning direction of the manufacturing beam. FIG. 10 is a diagram schematically showing the beam shape of the manufacturing beam having the profile shape in FIG. 4, along with a part of the wavy trajectory of the heating beam, where the emission position of the manufacturing beam is positioned in front of the emission position of the heating beam in the scanning direction of the manufacturing beam.

The manufacturing device 1 is capable of making a metallic manufactured object, or a non-metallic manufactured object (e.g. ABS resin, nylon, polyester, or carbon), and for instance, capable of making components to be used in products such as gas turbines, rocket engines, and turbochargers. More specifically, the manufacturing device 1 is capable of making gas turbine rotor blades, gas turbine ring segments, gas turbine stator vanes of an axial-flow turbine or a centrifugal turbine, impellers of a centrifugal compressor, combustors of a gas turbine, compressors of a gas turbine, and rocket engine valves.

As depicted in FIG. 1, the manufacturing device 1 includes a housing 3, a frame 5, a base plate 7, a powder-bed forming unit 9, a manufacturing-beam emission unit 11, a heating-beam emission unit 13, and a control device 15.

The housing 3 can be gas tight if necessary, so that the inside of the housing 3 can be vacuum, or can be charged with inert gas such as Ar gas.

The frame 5 is disposed inside the housing 3. The frame 5 has a square tubular shape, and has an opening on the upper end.

The base plate 7 is disposed inside the frame 5 so as to be movable in the vertical direction (z-axis direction), that is, in the up-down direction. The base plate 7 extends in the horizontal direction (x-axis direction and y-axis direction), and the peripheral edge of the base plate 7 is slidable on the inner wall of the frame 5.

The powder-bed forming unit 9 is capable of forming the powder bed 17 on the base plate 7. The powder bed 17 is formed by accumulating a powder that is a raw material of a manufactured object to be produced into layers of a predetermined thickness.

For instance, the powder-bed forming unit 9 includes a horizontal table 19 disposed so as to sandwich the upper opening of the frame 5, a roller 21 capable of running on the horizontal table 19 and the upper opening of the frame 5 in the horizontal direction, and a hopper 23 capable of supplying the raw-material powder on the horizontal table 19. In this case, it is possible to form the powder bed 17 inside the upper end portion of the powder bed 5 by carrying the powder on the horizontal table 19 to the upper opening of the frame 5 with the roller 21 and flattening the powder, while the base plate 7 is in a lower position than the upper opening of the frame 5.

Further, the configuration of a powder-bed forming unit is not limited to this. The powder bed 17 may be formed by supplying the powder into the frame 5 from a hopper that is movable in the horizontal direction and flattening the supplied powder. Alternatively, the powder-bed forming unit may include a powder tank disposed by the side of the frame 5 so as to be flush with the frame 5. In this case, it is possible to form the powder bed 17 by lifting the powder in the powder tank upward by pushing the bottom of the powder tank up, carrying the pushed-up powder into the frame 5 with a roller or the like, and flattening the powder.

The manufacturing-beam emission unit 11 is capable of emitting the manufacturing beam 25 onto the powder bed 17. In the region irradiated by the manufacturing beam 25, particles that form the powder bed 17 adhere to one another (sinter or melt and solidify), and thereby constitute a part of the manufactured object.

The heating-beam emission unit 13 is capable of emitting a heating beam 27 whose output is lower than that of the manufacturing beam 25 to the powder bed 17. Further, it is sufficient if the heating-beam emission unit 13 is capable of emitting the heating beam 27 whose output is lower than that of the manufacturing beam 25, and the manufacturing-beam emission unit 11 may be used also as the heating-beam emission unit 13.

The control device 15 is capable of controlling the manufacturing-beam emission unit 11 and the heating-beam emission unit 13. The control device 15 includes, for instance, a computer including a central processing unit (CPU), a memory, an external storage, and an input/output part.

Furthermore, the control device 15 is configured to be capable of controlling the manufacturing-beam emission unit 11 so that the manufacturing-beam emission unit 11 emits the manufacturing beam 25 onto the powder bed 17 along a setting route corresponding to the shape of the target object to be manufactured. The control device 15 is configured to be capable of controlling the manufacturing-beam emission unit 11 so that the heating-beam emission unit 13 emits the heating beam 27 onto the powder bed 17 along the setting route.

With the above configuration, it is possible to emit the manufacturing beam 25 and the heating beam 27 having a lower output than the manufacturing beam 25 along the setting route, to the powder bed 17, and thus it is possible to heat the region irradiated with the manufacturing beam 25 with the heating beam 27 locally.

Thus, mutual adhesion of particles of the powder bed 17 in an undesirable region is prevented, which makes it possible to remove powder in a finished manufactured object even in a case where the manufactured object has a complex internal structure.

Furthermore, it is possible to heat the region irradiated with the manufacturing beam 25 with the heating beam 27, and thus it is possible to reduce residual stress of a manufactured object, and suppress formation of cracks and voids in a manufactured object, which makes it possible to produce high-quality manufactured objects.

Accordingly, with the above configuration, it is possible to reduce residual stress in a manufactured object, and produce a high-quality manufactured object having a complex internal structure.

Further, the region irradiated with the manufacturing beam 25 may be a region being irradiated with the manufacturing beam 25, a region that is going to be irradiated with the manufacturing beam 25, or a region which has been already irradiated with the manufacturing beam 25.

Further, "the output of the heating beam 27 is lower than the output of the manufacturing beam 25" means that the average output (integral intensity per unit hour) of the heating beam 27 is lower than the average output of the manufacturing beam 25.

In some embodiments, the control device 15 is configured to be capable of changing the profile shape of the heating beam 27 on the powder bed 17.

With the above configuration, by changing the profile shape of the heating beam 27, it is possible to heat the powder bed 17 locally with the heating beam 27 under various conditions. Thus, with the above configuration, it is possible to reduce residual stress in a manufactured object reliably, and produce a high-quality manufactured object having a complex internal structure reliably.

Further, the profile shape of the heating beam 27 represents the relationship between the position in the horizontal plane (e.g. x-axis direction) and the output of the heating beam 27 on the powder bed 17, in a state where the heating beam 27 is not scanning.

For instance, the heating-beam emission unit 13 includes a heating beam source 29, a heating-beam adjustment part 31, and a heating beam scanning part 33. The heating beam source 29 is capable of emitting a heating beam 27. The heating-beam adjustment part 31 is capable of adjusting the output and the shape of the heating beam 27 emitted from the heating beam source 29. The heating beam scanning part 33 is capable of adjusting the emission position of the heating beam 27. In this case, the profile shape of the heating beam 27 can be changed by the control device 15 controlling the heating-beam adjustment part 31.

Further, the output of the heating beam 27 may be adjustable by controlling the heating beam source 29.

Similarly, the manufacturing-beam emission unit 11 may include a manufacturing beam source 35, a manufacturing-beam adjustment part 37, and a manufacturing beam scanning part 39. The manufacturing beam source 35 is capable of emitting a manufacturing beam 25. The manufacturing-beam adjustment part 37 is capable of adjusting the output and the profile shape of the manufacturing beam 25 emitted from the manufacturing beam source 35. The manufacturing beam scanning part 39 is capable of adjusting the emission position of the manufacturing beam 25. Normally, the output and the profile shape of the manufacturing beam 25 is set to the output and the profile suitable for manufacturing.

Further, the output of the manufacturing beam 25 may be adjustable by controlling the manufacturing beam source 35.

In some embodiments, as depicted in FIGs. 2 to 7, the control device 15 is capable of adjusting the profile shape of the heating beam 27 so that the beam diameter Dh of the heating beam 27 becomes greater than the beam diameter Df of the manufacturing beam 25. Furthermore, in FIGs. 3 and 5 to 10, the single-dot chain line represents the setting route 40 for the manufacturing beam 25. The setting route 40 is a path that the manufacturing beam 25 is to pass on the powder bed 17.

In some embodiments, the control device 15 is capable of adjusting the profile shape of the manufacturing beam 25 into a shape such that the output reaches its maximum in the center of the manufacturing beam 25 and the output decreases with distance from the center, for example, the shape of Gaussian distribution, as shown in FIGs. 2 and 4. In this case, as depicted in FIGs. 3 and 5 to 10, the beam shape of the manufacturing beam 25 on the powder bed 17 is a circular shape.

Furthermore, the beam shape is the shape of a line connecting dots where the output of the beam is half of the maximum value, on the powder bed 17, in a state where the powder bed 17 is irradiated with the beam without scanning the beam. Further, the beam diameter is the diameter of a circle in a case where the beam shape is circular (i.e. half output width), the length of the shorter axis of an oval in a case where the beam shape is oval, and the distance between two shorter sides facing each other in a case where the beam shape is rectangular.

In some embodiments, the control device 15 is capable of adjusting the profile shape of the heating beam 27 into a shape such that the output reaches its maximum in the center of the heating beam 27 and the output decreases with distance from the center, for example, the shape of Gaussian distribution, as shown in FIG. 2. In this case, as depicted in FIG. 3, the beam shape of the heating beam 27 on the powder bed 17 is a circular shape.

In some embodiments, the control device 15 is capable of adjusting the profile shape of the heating beam 27 into a plateau shape such that the output is constant in the center part of the heating beam 27 and the output decreases with distance from the center, as depicted in FIG. 4. In this case, as depicted in FIGs. 5 to 7, the beam shape of the manufacturing beam 27 on the powder bed 17 is a rectangular shape.

In some embodiments, the control device 15 is configured to be capable of changing the relative positional relationship between the emission position of the manufacturing beam 25 and the emission position of the heating beam 27 on the powder bed 17.

With the above configuration, by changing the relative positional relationship between the emission position of the manufacturing beam 25 and the emission position of the heating beam 27 on the powder bed 17, it is possible to heat the powder bed 17 locally with the heating beam 27 under various conditions. Thus, with the above configuration, it is possible to reduce residual stress in a manufactured object reliably, and produce a high-quality manufactured object having a complex internal structure reliably.

For instance, the control device 15 is capable of changing the relative positional relationship between the emission position of the manufacturing beam 25 and the emission position of the heating beam 27 on the powder bed 17 by controlling the heating beam scanning part 33. Further, scanning of the manufacturing beam 25 is performed under conditions suitable for manufacturing, and thus the relative positional relationship between the emission position of the manufacturing beam 25 and the emission position of the heating beam 27 is changed by controlling scanning of the heating beam 27.

The emission position of the manufacturing beam 25 is the position irradiated by the manufacturing beam 25 on the powder bed 17, and the emission position of the heating beam 27 is the position irradiated by the heating beam 27 on the powder bed 17. Changing the relative positional relationship between the emission position of the manufacturing beam 25 and the emission position of the heating beam 27 means changing the timing of emission of the manufacturing beam 25 from the timing of emission of the heating beam 27, for a point of the powder bed 17.

In some embodiments, as depicted in FIGs. 8 to 10, the control device 15 is configured to be capable of scanning the powder bed 17 with the heating beam 27 in a wavy shape that travels along the setting route 40, by controlling the heating-beam emission unit 13.

With the above configuration, the control device 15 is configured to be capable of scanning the powder bed 17 with the heating beam 27 in a wavy shape that travels along the setting route 40, and thus it is possible to heat the region to be irradiated by the manufacturing beam 25 and its surrounding sufficiently without concentrating the heating beam 27. Thus, with the above configuration, it is possible to reduce residual stress in a manufactured object reliably, and produce a high-quality manufactured object having a complex internal structure reliably.

FIGs. 8 to 10 are diagrams schematically showing the beam shape of the manufacturing beam 25 on the powder bed 17, along with a part of the wavy trajectory 42 of the heating beam 27.

In some embodiments, as depicted in FIGs. 3 and 5, the control device 15 is configured to be capable of positioning the emission position of the manufacturing beam 25 in the center of the emission position of the heating beam 27 in the scanning direction of the manufacturing beam 25, on the powder bed 17, by controlling the manufacturing-beam emission unit 11 and the heating-beam emission unit 13.

In some embodiments, as depicted in FIG. 8, the control device 15 is configured to be capable of overlapping the emission position of the heating beam 27 on the emission position of the manufacturing beam 25, on the powder bed 17, while the powder bed 17 is scanned with the heating beam 27 in a wavy shape, by controlling the manufacturing-beam emission unit 11 and the heating-beam emission unit 13.

In some embodiments, as depicted in FIGs. 6 and 9, the control device 15 is configured to be capable of positioning the emission position of the manufacturing beam 25 behind the center of the emission position of the heating beam 27 in the scanning direction of the manufacturing beam 25, on the powder bed 17, by controlling the manufacturing-beam emission unit 11 and the heating-beam emission unit 13.

In some embodiments, as depicted in FIG. 9, the control device 15 is configured to be capable of positioning the emission position of the manufacturing beam 25 behind and at a distance from the emission position of the heating beam 27 in the scanning direction of the manufacturing beam 25, on the powder bed 17, by controlling the manufacturing-beam emission unit 11 and the heating-beam emission unit 13.

In some embodiments, as depicted in FIGs. 7 and 10, the control device 15 is configured to be capable of positioning the emission position of the manufacturing beam 25 in front of the center of the emission position of the heating beam 27 in the scanning direction of the manufacturing beam 25, on the powder bed 17, by controlling the manufacturing-beam emission unit 11 and the heating-beam emission unit 13.

In some embodiments, as depicted in FIG. 10, the control device 15 is configured to be capable of positioning the emission position of the manufacturing beam 25 in front of and at a distance from the emission position of the heating beam 27 in the scanning direction of the manufacturing beam 25, on the powder bed 17, by controlling the manufacturing-beam emission unit 11 and the heating-beam emission unit 13.

In some embodiments, as depicted in FIGs. 3 and 5 to 7, the control device 15 is capable of adjusting the profile shape of the heating beam 27 so that the beam diameter Dh of the heating beam 27 becomes greater than the beam diameter Df of the manufacturing beam 25, and overlapping the region irradiated by the heating beam 27 with the region irradiated with the manufacturing beam 25.

In some embodiments, as depicted in FIGs. 3 to 5, the control device 15 is capable of adjusting the profile shape of the heating beam 27 so that the beam diameter Dh of the heating beam 27 becomes greater than the beam diameter Df of the manufacturing beam 25, positioning the region irradiated by the manufacturing beam 25 within the region irradiated by the heating beam 27, and matching the emission position of the manufacturing beam 25 with the center of the heating beam 27 in the scanning direction of the manufacturing beam 25.

In some embodiments, as depicted in FIG. 6, the control device 15 is capable of adjusting the profile shape of the heating beam 27 so that the beam diameter Dh of the heating beam 27 becomes greater than the beam diameter Df of the manufacturing beam 25, positioning the region irradiated by the manufacturing beam 25 in the region irradiated by the heating beam 27, and positioning the emission position of the manufacturing beam 25 behind the center of the heating beam 27 in the scanning direction of the manufacturing beam 25.

In some embodiments, as depicted in FIG. 7, the control device 15 is capable of adjusting the profile shape of the heating beam 27 so that the beam diameter Dh of the heating beam 27 becomes greater than the beam diameter Df of the manufacturing beam 25, positioning the region irradiated by the manufacturing beam 25 within the region irradiated by the heating beam 27, and positioning the emission position of the manufacturing beam 25 in front of the center of the heating beam 27 in the scanning direction of the manufacturing beam 25.

In some embodiments, the manufacturing-beam emission unit 11 also functions as the heating-beam emission unit 13. Further, the control device 15 is configured to control the manufacturing-beam emission unit 11 to emit the manufacturing beam 25 and the heating beam 27 at different timings from each other. In this case, an independent heating-beam emission unit 13 is unnecessary.

With the above configuration, the manufacturing-beam emission unit 11 also serves as the heating-beam emission unit 13, and thus it is possible to reduce residual stress in a manufactured object, and produce a high-quality manufactured object having a complex internal structure with a simple configuration.

In some embodiments, the control device 15 is configured to be capable of changing at least one of the relative positional relationship between the emission position of the manufacturing beam 25 and the emission position of the heating beam 27 on the powder bed 17, the profile shape of the heating beam 27 on the powder bed 17, or the scanning direction of the heating beam 27 on the powder bed 17, according to at least one of the scanning direction of the manufacturing beam 25, the material constituting the powder bed 17, or duration of pre-heating by the heating beam 27.

With the above configuration, by changing at least one of the relative positional relationship between the emission position of the manufacturing beam 25 and the emission position of the heating beam 27 on the powder bed 17, the profile shape of the heating beam 27 on the powder bed 17, or the scanning direction of the heating beam 27 on the powder bed 17, according to at least one of the scanning direction of the manufacturing beam 25, the material constituting the powder bed 17, or duration of pre-heating by the heating beam 27, it is possible to reduce the residual stress of a manufactured object while performing bare minimum pre-heating, and produce a high-quality manufactured object having a complex internal structure.

In some embodiments, the manufacturing beam 25 and the heating beam 27 are electronic beams. In this case, the manufacturing beam source 35 and the heating beam source 29 each include an electron gun. Further, the manufacturing-beam adjustment part 37 and the heating-beam adjustment part 31 each include an electromagnetic lens, for instance, and the manufacturing beam scanning part 39 and the heating beam scanning part 33 each include a deflection coil or the like.

In some embodiments, the manufacturing beam 25 and the heating beam 27 are laser beams. In this case, the manufacturing beam source 35 and the heating beam source 29 each include a solid laser like a YAG laser, a gas laser like a CO2 laser, or a semi-conductive laser, for instance. Further, the manufacturing-beam adjustment part 37 and the heating-beam adjustment part 31 each include an optical element such as an optical lens, for instance, and the manufacturing beam scanning part 39 and the heating beam scanning part 33 each include a galvanometer mirror or the like.

In some embodiments, the manufacturing beam 25 and the heating beam 27 are laser beams, and the manufacturing beam scanning part 39 and the heating beam scanning part 33 share a single galvanometer mirror. The laser beam is visible light or infrared light, for instance.

In some embodiments, the wavelength of the manufacturing beam 25 and the wavelength of the heating beam 27 are the same as each other.

In some embodiments, the wavelength of the manufacturing beam 25 and the wavelength of the heating beam 27 are different from each other.

In some embodiments, the manufacturing beam 25 is a continuous wave, and the heating beam 27 is a pulse wave.

In some embodiments, one of the manufacturing beam 25 and the heating beam 27 is an electronic beam, and the other is a laser beam.

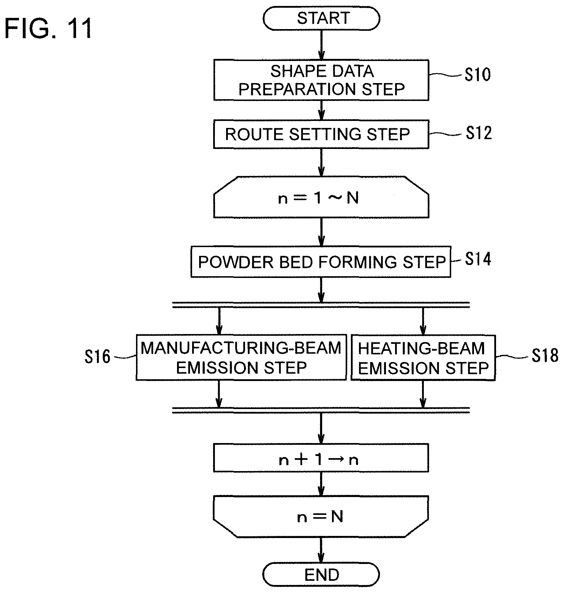

FIG. 11 is a flowchart showing a schematic procedure of a selective beam additive manufacturing method (hereinafter, also referred to as manufacturing method) according to an embodiment of the present invention. The manufacturing method depicted in FIG. 11 can be performed by using the manufacturing device 1 depicted in FIG. 1.

As depicted in FIG. 11, the manufacturing method includes a shape-data preparation step S10, a route setting step S12, a powder-bed forming step S14, a manufacturing-beam emission step S16, and a heating-beam emission step S18.

The shape-data preparation step S10 includes preparing data (shape data) related to the shape of the product to be manufactured. The shape data is three-dimensional CAD data, for instance. The prepared shape data is input to the control device 15.

The route setting step S12 includes determining the route (setting route 40) of emission of the manufacturing beam 25 for each of the plurality of layers of powder bed 17, on the basis of the shape data. The setting route 40 can be automatically determined by the control device 15 automatically executing a program prepared in advance.

The powder-bed forming step S14 includes forming a powder bed 17 on a base plate 7 disposed so as to be movable up and down in the frame 5. The powder bed 17 can be formed by a powder-bed forming unit 9. The control device 15 may control the powder-bed forming unit 9 to form the powder bed 17.

The manufacturing-beam emission step S16 includes emitting a manufacturing beam 25 onto the powder bed 17 along the setting route 40 corresponding to the shape of the object to be manufactured.

The heating-beam emission step S18 includes emitting a heating beam 27 whose output is lower than that of the manufacturing beam 25, along the setting route 40, onto the powder bed 17.

Further, it is possible to manufacture a target object by repeating the powder-bed forming step S14, the manufacturing-beam emission step S16, and the heating-beam emission step S18 a predetermined of times (N times) while lowering the base plate 7 in stages.

With the above configuration, the manufacturing beam 25 and the heating beam 27 having a lower output than the manufacturing beam 25 are emitted along the setting route 40, to the powder bed 17, and thus it is possible to heat the region irradiated with the manufacturing beam 25 with the heating beam 27 locally.

Thus, mutual adhesion of particles of the powder bed 17 in an undesirable region is prevented, which makes it possible to remove powder in a finished manufactured object even in a case where the manufactured object has a complex internal structure.

Furthermore, it is possible to heat the region irradiated with the manufacturing beam 25 with the heating beam 27, and thus it is possible to reduce residual stress of a manufactured object, and suppress formation of cracks and voids in a manufactured object, which makes it possible to produce high-quality manufactured objects.

Accordingly, with the above configuration, it is possible to reduce residual stress in a manufactured object, and produce a high-quality manufactured object having a complex internal structure.

Further, the region irradiated with the manufacturing beam 25 may be a region being irradiated with the manufacturing beam 25, a region that is going to be irradiated with the manufacturing beam 25, or a region which has been already irradiated with the manufacturing beam 25.

Further, "the output of the heating beam 27 is lower than the output of the manufacturing beam 25" means that the average output (integral intensity per unit hour) of the heating beam 27 is lower than the average output of the manufacturing beam 25.

In some embodiments, as depicted in FIGs. 3, 5 to 7, the heating-beam emission step S18 includes emitting the heating beam 27 having a circular or rectangular beam shape.

With the above configuration, by emitting the heating beam 27 having a circular or rectangular beam shape, it is possible to reduce residual stress in a manufactured object, and produce a high-quality manufactured object having a complex internal structure.

In some embodiments, as depicted in FIGs. 2 to 7, the heating-beam emission step S18 includes emitting the heating beam 27 having a greater beam diameter than the beam diameter Df of the manufacturing beam 25.

With the above configuration, by emitting the heating beam 27 having a greater beam diameter than beam diameter Df of the manufacturing beam 25, it is possible to heat the region irradiated by the manufacturing beam 25 and its surrounding with the heating beam 27. Thus, with the above configuration, it is possible to reduce residual stress in a manufactured object, and produce a high-quality manufactured object having a complex internal structure.

In some embodiments, as depicted in FIGs. 8 to 10, the heating-beam emission step S18 includes scanning the powder bed 17 with the heating beam 27 in a wavy shape that travels along the setting route 40, and the beam diameter Dh of the heating beam 27 is equal to or smaller than the beam diameter Df of the manufacturing beam 25.

With the above configuration, even though the beam diameter Dh of the heating beam 27 is equal to or smaller than the beam diameter Df of the manufacturing beam 25, by scanning the powder bed 17 with the heating beam 27 in a wavy shape, it is possible to heat the region irradiated by the manufacturing beam 25 and its surrounding with the heating beam 27. Thus, it is possible to reduce residual stress in a manufactured object, and produce a high-quality manufactured object having a complex internal structure.

Further, in a case where the powder bed 17 is scanned with the heating beam 27 in a wavy shape, the beam diameter Dh of the heating beam 27 may be greater than the beam diameter Df of the manufacturing beam 25.

Further, in FIGs. 8 to 10, the beam shape of the heating beam 27 is not shown, and only a part of the trajectory 42 of the heating beam 27 is shown.

In some embodiments, as depicted in FIGs. 8 to 10, the heating-beam emission step S18 includes emitting the heating beam 27 onto the powder bed 17 while scanning the powder bed 17 with the heating beam 27 in a wavy shape that travels along the setting route 40.

With the above configuration, the powder bed 17 is scanned with the heating beam 27 in a wavy shape that travels along the setting route 40, and thus it is possible to heat the region to be irradiated by the manufacturing beam 25 and its surrounding sufficiently without concentrating the heating beam 27. Thus, with the above configuration, it is possible to reduce residual stress in a manufactured object reliably, and produce a high-quality manufactured object having a complex internal structure reliably.

Furthermore, scanning in a wavy shape includes not only the scanning in a sine-wave shape depicted in FIGs. 8 to 10, but also scanning in a rectangular-wave shape, a triangular-wave shape, and a zigzag shape.

In some embodiments, the powder bed 17 is scanned so that the heating beam 27 travels on the setting route 40 along the setting route 40, and the scanning speed of the heating beam 27 is the same as the scanning speed of the manufacturing beam 25.

In some embodiments, as depicted in FIGs. 3 and 5, the heating-beam emission step S18 includes emitting the heating beam 27 having a greater beam diameter Dh than the beam diameter Df of the manufacturing beam 25, such that the emission position of the manufacturing beam 25 is in the center of the emission position of the heating beam 27 in the scanning direction of the manufacturing beam 25, on the powder bed 17.

With the above configuration, the heating beam 27 is emitted so that the emission position of the manufacturing beam 25 on the powder bed 17 is in the center of the emission position of the heating beam 27 in the scanning direction of the manufacturing beam 25, and thus it is possible to heat the region to be irradiated by the manufacturing beam 25 in advance with the heating beam 27, and heat the region already irradiated by the manufacturing beam 25 afterward with the heating beam 27. Thus, at a point on the setting route 40, it is possible to prevent a rapid temperature increase and a rapid temperature decrease before and after emission of the manufacturing beam 25. Accordingly, with the above configuration, it is possible to reduce residual stress in a manufactured object reliably, and produce a high-quality manufactured object having a complex internal structure reliably.

In some embodiments, as depicted in FIG. 8, the heating-beam emission step S18 includes overlapping the emission position of the heating beam 27 with the emission position of the manufacturing beam 25, on the powder bed 17, while scanning the powder bed 17 with the heating beam 27.

In some embodiments, as depicted in FIGs. 6 and 9, the heating-beam emission step S18 includes emitting the heating beam 27 so that the emission position of the manufacturing beam 25 is behind the center of the emission position of the heating beam 27 in the scanning direction of the manufacturing beam 25, on the powder bed 17.

With the above configuration, the heating beam 27 is emitted so that the emission position of the manufacturing beam 25 on the powder bed 17 is behind the center of the emission position of the heating beam 27 in the scanning direction of the manufacturing beam 25, and thus it is possible to heat the region to be irradiated by the manufacturing beam 25 in advance with the heating beam 27. Thus, at a point on the setting route 40, it is possible to prevent a rapid temperature increase before and after emission of the manufacturing beam 25. Accordingly, with the above configuration, it is possible to reduce residual stress in a manufactured object reliably, and produce a high-quality manufactured object having a complex internal structure reliably.

In some embodiments, as depicted in FIG. 9, the heating-beam emission step S18 includes emitting the heating beam 27 so that the emission position of the manufacturing beam 25 is behind and at a distance from the emission position of the heating beam 27 in the scanning direction of the manufacturing beam 25, on the powder bed 17.

In some embodiments, as depicted in FIGs. 7 and 10, the heating-beam emission step S18 includes emitting the heating beam 27 so that the emission position of the manufacturing beam 25 is in front of the center of the emission position of the heating beam 27 in the scanning direction of the manufacturing beam 25, on the powder bed 17.

With the above configuration, the heating beam 27 is emitted so that the emission position of the manufacturing beam 25 on the powder bed 17 is in front of the center of the emission position of the heating beam 27 in the scanning direction of the manufacturing beam 25, and thus it is possible to heat the region already irradiated by the manufacturing beam 25 afterward with the heating beam 27. Thus, at a point on the setting route 40, it is possible to prevent a rapid temperature decrease before and after emission of the manufacturing beam 25. Accordingly, with the above configuration, it is possible to reduce residual stress in a manufactured object reliably, and produce a high-quality manufactured object having a complex internal structure reliably.

In some embodiments, as depicted in FIG. 10, the heating-beam emission step S18 includes emitting the heating beam 27 so that the emission position of the manufacturing beam 25 is in front of and at a distance from the emission position of the heating beam 27 in the scanning direction of the manufacturing beam 25, on the powder bed 17.

In some embodiments, as depicted in FIGs. 3 and 5, the heating-beam emission step S18 includes adjusting the profile shape of the heating beam 27 so that the beam diameter Dh of the heating beam 27 becomes greater than the beam diameter Df of the manufacturing beam 25, positioning the region irradiated by the manufacturing beam 25 within the region irradiated by the heating beam 27, and matching the emission position of the manufacturing beam 25 with the center of the heating beam 27 in the scanning direction of the manufacturing beam 25.

In some embodiments, as depicted in FIG. 6, the heating-beam emission step S18 includes adjusting the profile shape of the heating beam 27 so that the beam diameter Dh of the heating beam 27 becomes greater than the beam diameter Df of the manufacturing beam 25, positioning the region irradiated by the manufacturing beam 25 in the region irradiated by the heating beam 27, and positioning the emission position of the manufacturing beam 25 behind the center of the heating beam 27 in the scanning direction of the manufacturing beam 25.

In some embodiments, as depicted in FIG. 7, the heating-beam emission step S18 includes adjusting the profile shape of the heating beam 27 so that the beam diameter Dh of the heating beam 27 becomes greater than the beam diameter Df of the manufacturing beam 25, positioning the region irradiated by the manufacturing beam 25 within the region irradiated by the heating beam 27, and positioning the emission position of the manufacturing beam 25 in front of the center of the heating beam 27 in the scanning direction of the manufacturing beam 25.

In some embodiments, the heating-beam emission step S18 includes changing at least one of the relative positional relationship between the emission position of the manufacturing beam 25 and the emission position of the heating beam 27 on the powder bed 17, the profile shape of the heating beam 27 on the powder bed 17, or the scanning direction of the heating beam 27 on the powder bed 17, according to at least one of the scanning direction of the manufacturing beam 25, the material constituting the powder bed 17, or duration of pre-heating by the heating beam 27.

With the above configuration, by changing at least one of the relative positional relationship between the emission position of the manufacturing beam 25 and the emission position of the heating beam 27 on the powder bed 17, the profile shape of the heating beam 27 on the powder bed 17, or the scanning direction of the heating beam 27 on the powder bed 17, according to at least one of the scanning direction of the manufacturing beam 25, the material constituting the powder bed 17, or duration of pre-heating by the heating beam 27, it is possible to reduce the residual stress of a manufactured object while performing bare minimum pre-heating, and produce a high-quality manufactured object having a complex internal structure.

Embodiments of the present invention were described in detail above, but the present invention is not limited thereto, and various amendments and modifications may be implemented.

For instance, while the above described manufacturing device 1 and the manufacturing method are suitable for manufacturing of an object having a complex internal structure, the manufacturing device 1 and the manufacturing method can be also applied to manufacturing of an object having a simple internal structure. Further, objects to be manufactured by the above described manufacturing device 1 and the manufacturing method are not limited to components of the above described products.

### Description of Reference Numerals

- 1: Selective beam addictive manufacturing device
- 3: Housing
- 5: Frame
- 7: Base plate
- 9: Powder-bed forming unit
- 11: Manufacturing-beam emission unit
- 13: Heating-beam emission unit
- 15: Control device
- 17: Powder bed
- 19: Horizontal table
- 21: Roller
- 23: Hopper
- 25: Manufacturing beam
- 27: Heating beam
- 29: Heating-beam source
- 31: Heating-beam adjustment part
- 33: Heating-beam scanning part
- 35: Manufacturing-beam source
- 37: Manufacturing-beam adjustment part
- 39: Manufacturing-beam scanning part
- 40: Setting route
- 42: Trajectory of heating beam
- S10: Shape-data preparation step
- S12: Route setting step
- S14: Powder-bed forming step
- S16: Manufacturing-beam emission step
- S18: Heating-beam emission step

## Claims

1. A selective beam additive manufacturing device, comprising:
a frame;
a base plate capable of moving up and down inside the frame;
a powder-bed forming unit capable of forming a powder bed on the base plate;
a manufacturing-beam emission unit capable of emitting a manufacturing beam onto the powder bed;
a heating-beam emission unit capable of emitting a heating beam whose output is lower than that of the manufacturing beam onto the powder bed; and
a control device capable of controlling the manufacturing-beam emission unit and the heating-beam emission unit,
wherein the control device is configured to be capable of:
controlling the manufacturing-beam emission unit such that the manufacturing-beam emission unit emits the manufacturing beam onto the powder bed along a setting route corresponding to a shape of a target object to be manufactured; and
controlling the manufacturing-beam emission unit such that the heating-beam emission unit emits the heating beam onto the powder bed along the setting route.

2. The selective beam additive manufacturing device according to claim 1,
wherein the control device is configured to be capable of changing a profile shape of the heating beam on the powder bed.

3. The selective beam additive manufacturing device according to claim 1 or 2,
wherein the control device is configured to be capable of changing a relative positional relationship between an emission position of the manufacturing beam and an emission position of the heating beam on the powder bed.

4. The selective beam additive manufacturing device according to any one of claims 1 to 3,
wherein the control device is configured to be capable of scanning the powder bed with the heating beam in a wavy shape which travels along the setting route.

5. The selective beam additive manufacturing device according to any one of claims 1 to 4,
wherein the manufacturing-beam emission unit is configured to also function as the heating-beam emission unit, and
wherein the control device is configured to be capable of emitting the manufacturing beam and the heating beam at different timings from each other.

6. The selective beam additive manufacturing device according to claim 1,
wherein the control device is configured to be capable of changing at least one of a relative positional relationship between an emission position of the manufacturing beam and an emission position of the heating beam on the powder bed, a profile shape of the heating beam on the powder bed, or a scanning direction of the heating beam on the powder bed, according to at least one of a scanning direction of the manufacturing beam, a material constituting the powder bed, or duration of pre-heating by the heating beam.

7. A selective beam additive manufacturing method, comprising:
a powder-bed forming step of forming a powder bed on a base plate disposed so as to be movable up and down in a frame;
a manufacturing-beam emission step of emitting with a manufacturing beam onto the powder bed along a setting route corresponding to a shape of a target object to be manufactured; and
a heating-beam emission step of emitting a heating beam whose output is lower than that of the manufacturing beam along the setting route onto the powder bed.

8. The selective beam additive manufacturing method according to claim 7,
wherein the heating-beam emission step includes emitting the heating beam having a circular or rectangular beam shape.

9. The selective beam additive manufacturing method according to claim 7 or 8,
wherein the heating-beam emission step includes emitting the heating beam having a greater beam diameter than a beam diameter of the manufacturing beam.

10. The selective beam additive manufacturing method according to any one of claims 7 to 9,
wherein the heating-beam emission step includes emitting the heating beam while scanning the powder bed with the heating beam in a wavy shape which travels along the setting route.

11. The selective beam additive manufacturing method according to claim 9,
wherein the heating-beam emission step includes emitting the heating beam so as to position an emission position of the manufacturing beam on the powder bed in the center of an emission position of the heating beam, in a scanning direction of the manufacturing beam.

12. The selective beam additive manufacturing method according to any one of claims 7 to 10,
wherein the heating-beam emission step includes emitting the heating beam so as to position an emission position of the manufacturing beam on the powder bed behind the center of an emission position of the heating beam, in a scanning direction of the manufacturing beam.

13. The selective beam additive manufacturing method according to any one of claims 7 to 10,
wherein the heating-beam emission step includes emitting the heating beam so as to position an emission position of the manufacturing beam on the powder bed in front of the center of an emission position of the heating beam, in a scanning direction of the manufacturing beam.

14. The selective beam additive manufacturing method according to claim 7,
wherein the heating-beam emission step includes changing at least one of a relative positional relationship between an emission position of the manufacturing beam and an emission position of the heating beam on the powder bed, a profile shape of the heating beam on the powder bed, or a scanning direction of the heating beam on the powder bed, according to at least one of a scanning direction of the manufacturing beam, a material constituting the powder bed, or duration of pre-heating by the heating beam.
